Europäisches Patentamt

European Patent Office

Office européen des brevets

(19)

(11) Publication number:  **0 143 661**
**B1**

(12)  # EUROPEAN PATENT SPECIFICATION

(45) Date of publication of patent specification: **23.08.89**    (51) Int. Cl.⁴: **G 21 C 7/10**

(21) Application number: **84308276.9**

(22) Date of filing: **29.11.84**

(54) **Auxiliary control rod for nuclear reactors.**

(30) Priority: **30.11.83 US 556516**

(43) Date of publication of application:
**05.06.85 Bulletin 85/23**

(45) Publication of the grant of the patent:
**23.08.89 Bulletin 89/34**

(84) Designated Contracting States:
**BE DE FR GB IT SE**

(56) References cited:
**FR-A-1 230 962**
**FR-A-2 306 735**
**GB-A-1 056 938**
**US-A-4 355 449**

(73) Proprietor: **WESTINGHOUSE ELECTRIC CORPORATION**
**Westinghouse Building Gateway Center**
**Pittsburgh Pennsylvania 15235 (US)**

(72) Inventor:  **Francis, Trevor Andrew**
**504 Greenhaven Court**
**Pittsburgh Pennsylvania (US)**
Inventor:  **Wilson, John Francis**
**3560 Meadowgate Drive**
**Murrysville Pennsylvania (US)**

(74) Representative: **van Berlyn, Ronald Gilbert**
**23, Centre Heights**
**London, NW3 6JG (GB)**

Courier Press, Leamington Spa, England.

## Description

This invention relates to auxiliary control rods for nuclear reactors, and more especially for the control of the reactivity of pressurized-water reactors (PWR).

In nuclear reactors in accordance with the teachings of the prior art, the reactivity is controlled by control rods (which are herein referred to as "main control rods") whose neutron-capture cross-section is high. A typical such main control rod includes pellets of boron or its compounds in cladding. Such a main control rod has a neutron-capture cross-section of about 0.34 inverse centimeter $(cm^{-1})$. The control of reactivity with main control rods of this type presents the difficulty that a small movement of the control rod in or out of the nuclear core produces a large change in reactivity. The proper setting of these control rods is not readily achieved. Attempts have been made to overcome this disadvantage by introducing shim into the coolant. This has not proven entirely satisfactory. The proposal has been made to fine-set the reactivity by providing auxiliary control rods, each rod consisting of a tube or shell of a material having an appreciable neutron-absorption cross-section but a cross-section which is small compared to that of the main rods. Typically the fine-setting control rods can be composed of stainless steel tubes. Typically stainless steel has a neutron-capture cross-section of about 0.02 $cm^{-1}$. However, the pressure of the coolant in a PWR is about 15500 KPa (2250 pounds per square inch) and the temperature is about 315°C (600°F). In this environment a tube of reasonable thickness would collapse. Movement in the core or removal from the core of such a collapsed auxiliary control rod might be restricted or prevented entirely and the operation of the reactor would be degraded.

It is an object of this invention to overcome the disadvantages of the prior art and to provide a fine-setting auxiliary control rod for a nuclear reactor which shall not collapse under the pressure of the coolant of the reactor.

Accordingly, the present invention resides in an auxiliary control rod for fine-setting the reactivity of a nuclear reactor core the reactivity of which is mainly controlled by main control rods, whose neutron capture cross section is about 0.34 $cm^{-1}$, characterized in that said auxiliary rod comprises a stack of pellets of zirconium oxide enclosed in cladding of a material having a neutron-capture cross-section of about 0.02 $cm^{-1}$.

Desirably, the cladding is composed of stainless steel. The zirconium oxide has a very low neutron-capture cross-section for thermal neutrons. The neutron-capture of the fine-setting may be determined by the thickness of the cladding and is as stated about 0.02 $cm^{-1}$. Neither the zirconium oxide pellets nor the stainless steel expand axially appreciably in neutron flux. The fine-setting control rods have the additional advantage that they displace the coolant and reduce its moderating effect. This feature is desirable in the earlier part (during about the first 10 months) of each refuelling cycle.

In order that the invention can be more clearly understood, a convenient embodiment thereof will now be described, by way of example, with reference to the accompanying drawings, in which:

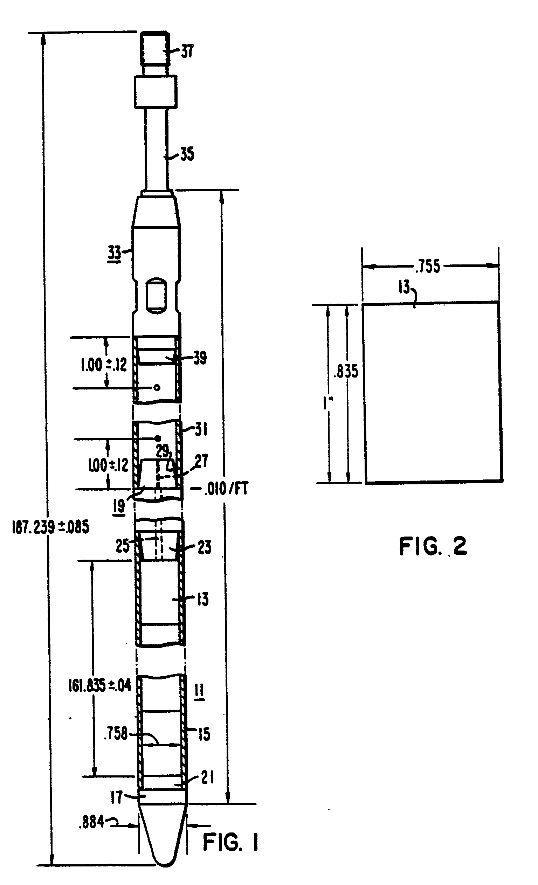

Figure 1 is a view in side elevation, partly in section, of a fine-setting auxiliary control rod; and

Fig. 2 is a view in side elevation of a pellet of the control rod shown in Fig. 1.

To aid those skilled in the art to practice this invention the drawing shows dimensions of a typical fine-setting control rod. It is not intended that the presentation of these dimensions should in any way restrict the scope of this invention.

Referring to the drawings, a fine-setting auxiliary control rod 11 includes a closely-packed stack of zirconium-oxide pellets 13 enclosed in cladding 15 of stainless steel.

While other compositions of stainless steel may serve the purposes of this invention, the stainless steel used in the practice of this invention is AISI 304. This alloy has the following typical composition in weight percent:

| | |
|---|---|
| C | 0.03—0.08 |
| Mn | 2.00 |
| Si | 0.75 |
| Cr | 17—19 |
| Ni | 9—11 |
| Co | 0.08 |
| P | Max 0.03 |
| S | Max 0.03 |
| Fe | Balance. |

The cladding 15 is closed at one by an end plug 17 and at opposite end by a mid-plug 19. The end plug 17 has a stem 21 extending from a shoulder. The cladding 15 is welded pressure tight at the shoulder. The mid-plug 19 is tapered at the end which abuts the pellets 13. The cladding 15 is welded pressure tight to the mid-plug. The taper 23 facilitates the seating of the cladding preparatory to the welding operation. The mid-plug 19 has an axial opening 25 which terminates in an axial hole 27 of small diameter. Once the capsule of the pellets 13, the cladding 15, the end plug 17 and the mid-plug 19 are formed into a pressure-tight structure, the interior of the capsule is exhausted and back-filled with helium (or other inert gas) at about $10^5$ Pa (1 atmosphere) pressure. Reaction of the zirconium or zirconium oxide with oxygen or water vapor in the capsule is precluded by replacement of these components by inert gas.

The mid-plug 19 also terminates in a taper 29 at the opposite end. The control rod 11 includes a shell or tube 31 typically of 304 AISI stainless steel. The tube 31 is welded between the taper 29 and to another end plug 33 at the opposite end. This end plug 33 has an extension 35 which carries a threaded tip 37 that engages a threaded sleeve (not shown) of the spider (not shown) which drives the control rod 11. Typically for a fuel assembly having 19 by 19 receptacles for fuel rods, main control rods, fine-setting control rods 11 and coolant-displacement rods 18, auxiliary control rods 11 typically are carried by the spider for movement in and out of thimbles in each fuel assembly. The end plug 33 terminates in a stem 39 extending from a shoulder. The tube 31 is welded to this shoulder at one end and to the taper 29 at the opposite end. The tube 31 is vented to admit the coolant in which it is immersed so that the pressure of the coolant across the wall of the tube is equalized.

During operation the auxiliary control rods 11 are moved inwardly and outwardly of the core by the control rod drive mechanism (CRDM) as the position of the main control rods changes, to fine-set the control. The movement is in steps typically each of 1.6 cm (0.625 inch). The pellets 13 support the cladding 15. Irradiation by neutron flux does not affect the cladding nor does it affect the pellets. Formation of unsupported gaps in the cladding or strain on the cladding by expanding pellets is precluded. The pellets are high strength ceramics and are packed closely. They do not crumble under the impacts of CRDM stepping.

**Claims**

1. An auxiliary control rod for fine-setting the reactivity of a nuclear reactor core the reactivity of which is mainly controlled by main control rods, whose neutron capture cross section is about 0.34 cm$^{-1}$, characterized in that said auxiliary rod comprises a stack of pellets of zirconium oxide enclosed in cladding of a material having a neutron-capture cross-section of about 0.02 cm$^{-1}$.

2. A rod according to claim 1, characterized in that the cladding is composed of stainless steel.

3. A rod according to claim 2, characterized in that the stainless steel cladding has approximately the following composition in weight percent:

| | |
|---|---|
| C | 0.03—0.08 |
| Mn | 2.00 |
| Si | 0.75 |
| Cr | 17—19 |
| Ni | 9—11 |
| Co | 0.08 |
| P | Max 0.03 |
| S | Max 0.03 |
| Fe | Balance. |

4. A rod according to claim 1, 2 or 3, characterized in that a capsule which includes the zirconium oxide pellets in the cladding contains an inert gas at pressure of about 10$^5$ Pa (one atmosphere).

**Patentansprüche**

1. Ein Hilfssteuerstab für die Feineinstellung der Reaktivität eines Nuklearreaktorkerns, dessen Reaktivität hauptsächlich gesteuert wird durch Hauptsteuerstäbe, deren Neutronen-Fangquerschnitt etwa 0,34 cm$^{-1}$ beträgt, dadurch gekennzeichnet, daß der Hilfssteuerstab einen Stapel von Pellets aus Zirkonoxyd in einer Umhüllung aus einem Material umschließt, das einen Neutronen-Fangquerschnitt von etwa 0,02 cm$^{-1}$ aufweist.

2. Ein Stab nach Anspruch 1, dadurch gekennzeichnet, daß die Umhüllung aus rostfreiem Stahl besteht.

3. Ein Stab nach Anspruch 2, dadurch gekennzeichnet, daß die Umhüllung aus rostfreiem Stahl ungefähr die folgende Zusammensetzung in Gew % aufweist:

| | |
|---|---|
| C | 0,03—0,08 |
| Mn | 2,00 |
| Si | 0,75 |
| Cr | 17—19 |
| Ni | 9—11 |
| Co | 0,08 |
| P | Max 0,03 |
| S | Max 0,03 |
| Fe | Rest. |

4. Ein Stab nach Anspruch 1, 2 oder 3, dadurch gekennzeichnet, daß eine Kapsel, die die Zirkonoxyd-Pellets in der Umhüllung umfaßt, ein inertes Gas mit einem Druck von etwa 10$^5$ Pa (1 Atmosphäre) enthält.

**Revendications**

1. Barre de contrôle auxiliaire pour régler finement la réactivité d'un noyau de réacteur nucléaire dont la réactivité est commandée essentiellement par des barres de contrôle principal dont la section transversale de capture des neutrons est d'environ 0,34 cm$^{-1}$, barre de contrôle auxiliaire caractérisée en ce qu'elle est constituée par une pile de pastilles d'oxyde de zirconium enfermées dans un revêtement d'un matériau présentant une section transversale de capture de neutrons d'environ 0,02 cm$^{-1}$.

2. Barre selon la revendication 1, caractérisée en ce que le revêtement est réalisé en acier inoxydable.

3. Barre selon la revendication 2, caractérisée en ce que le revêtement d'acier inoxydable présente approximativement, la composition suivante en pourcentages de poids:

| | |
|---|---|
| C | 0,03—0,08 |
| Mn | 2,00 |
| Si | 0,75 |
| Cr | 17—19 |
| Ni | 9—11 |
| Co | 0,08 |
| P | Max 0,03 |
| S | Max 0,03 |
| Fe | Complément à 100%. |

4. Barre selon l'une quelconque des revendications 1, 2 et 3, caractérisée en ce qu'une capsule comprenant les pastilles d'oxyde de zirconium à l'intérieur du revêtement, contient un gaz inerte sous une pression d'environ 10$^5$ Pa (une atmosphère).

FIG. 1

FIG. 2